# EUROPEAN PATENT SPECIFICATION

(11) **EP 2 164 125 B1**
(45) Date of publication and mention of the grant of the patent: **29.05.2013**
(21) Application number: 09156894.9
(22) Date of filing: 31.03.2009
(51) Int. Cl.: H01M 8/04, H01M 8/06

(54) **Fuel cell system and air supply method thereof**
Brennstoffzellensystem und Luftversorgungsverfahren
Système de pile à combustible et son procédé d'alimentation en air

(30) Priority: 09.09.2008 KR 20080088953
(43) Date of publication of application: 17.03.2010
(73) Proprietor: Samsung Electronics Co., Ltd., Suwon-si, Gyeonggi-do, 443-742 (KR)
(72) Inventor: Heo, Jin S., Gyeonggi-do (KR); Higashi, Takami, Gyeonggi-do (KR); Oh, Jae-Hyuk, Gyeonggi-do (KR)
(74) Representative: Grünecker, Kinkeldey, Stockmair & Schwanhäusser

(56) References cited:
- EP-A1- 1 901 384
- JP-A- 6 215 788
- US-A1- 2006 046 114
- US-A1- 2008 113 232
- US-A1- 2008 305 373

## Description

### BACKGROUND

### 1. Field

The present invention relates to a fuel cell system and an air supply method thereof, and, more particularly, to a fuel cell system and an air supply method thereof, which stably supply air to a stack and a burner.

### 2. Description of the Related Art

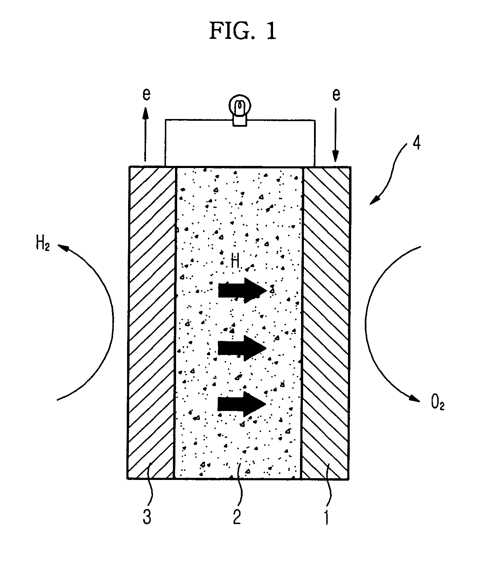

Generally, a fuel cell is an electricity generating device to directly convert chemical energy of hydrogen and oxygen contained in hydrocarbon-based fuel such as methanol, ethanol, or natural gas into electrical energy in accordance with an electrochemical reaction. FIG. 1 is a schematic view to illustrate the electricity generating principle of such a fuel cell. When air containing oxygen is supplied to a cathode 1, and fuel containing hydrogen is supplied to an anode 3, a reaction reverse to electrolysis of water occurs through an electrolyte membrane 2, so that electricity is generated. Typically, the electricity generated from such a unit cell 4, has a voltage too low to enable the electricity to be useful. To this end, several unit cells 4 are connected in series in the form of a stack.

To produce hydrogen to be supplied to such a fuel cell stack (hereinafter, simply referred to as a "stack"), a fuel treating unit is used. The fuel treating unit includes a burner to heat a reformer functioning to modify fuel (for example, city gas for domestic use), and thus to produce high-quality hydrogen, such that the reaction temperature of the reformer is maintained at an appropriate temperature. Air for the stack is supplied to the stack, together with high-quality hydrogen, for generation of electricity. Air for the burner is supplied to the burner, together with fuel, for adjustment of the temperature of the reformer. Such stack air and burner air have considerable influence on the production of high-quality hydrogen and the generation of electricity in the stack. That is, the operation performance of the fuel cell system is considerably influenced by a stack air control to determine the durability of the stack and the output power of the stack, and a lamda (the ratio of burner fuel to air) control to control the ratio of the burner air to fuel, at which the burner air and fuel are supplied to the burner, and thus to enable fuel supplied to the reformer, namely, reformer fuel, to efficiently react in the reformer while maintaining a flame at the burner.

Generally, blowers or pumps are used to supply stack air and burner air, respectively. However, this is non-economical in terms of costs. In the following description, a term "air pump" will be used in common for terms "blower" and "pump".

The stack air may be used in the stack at an actual usage rate of 50% during operation of the fuel cell system. Accordingly, there may be no problem even when the supply of the stack air is roughly controlled, as compared to the supply of the burner air. However, the burner air used to maintain the temperature for the modification reaction of the reformer has considerable influence on the ignition and flame failure of the burner. Accordingly, an appropriate temperature for a modification reaction and a prevention of soot formation in the burner may be maintained only when a control for the supply amount of the burner air, namely, a lamda control, is stable. To this end, it is necessary to precisely control the supply amount of the burner air. Therefore, the configurations of balance-of-plant (BOP) units, such as pumps, blowers, valves, etc., and control methods thereof, which are used to provide an economical and effective supply system for stack air and burner air, taking into consideration the above-mentioned conditions, play an important role in the fuel cell system.

A control method of reformer temperature in fuel cell generating facilities is known from JP 06-215788. EP 1901384 discloses a fuel cell system with purging device and a method for operating same.

### SUMMARY

The present invention has been made in view of the above-mentioned problems, and an aspect of the present invention is to provide an air supply device in a fuel cell system and a control method thereof, which are capable of automating a lamda control, and achieving a fuel cell system operation efficiently and stably coping with pressure loss and pulsation occurring within the system, while using a minimum number of balance-of-plant (BOP) units for the supply of stack air and burner air.

The invention provides a fuel cell system according to claim 1 and an air supply method according to claim 9.

Additional aspects and/or advantages of the invention will be set forth in part in the description which follows and, in part, will be apparent from the description, or may be learned by practice of the invention.

In accordance with an aspect, a fuel cell system includes: a fuel treating unit including a burner, to produce modified gas; a stack to receive the modified gas from the fuel treating unitand to generate energy; an air supplying unit to supply air to the stack and the burner; and a controller to determine an air supply amount required for a real-time operation of the stack and a real-time operation of the burner, and to control the air supplying unit to supply the determined air supply amount.

The air supplying unit includes a first air supplier to control a total supply amount of the air supplied to the stack and the burner, and a second air supplier to control air supply amounts respectively supplied to the stack and the burner.

The first air supplier includes an air pump to supply the air to the stack and the burner, and may be controlled, wherein the air pump supplies an air amount equal to a sum of the air supply amount supplied to the stack as a supply amount of stack air and the air supply amount supplied to the burner as a supply amount of burner air.

The first air supplier may control the total supply amount of the air so that the air pump supplies the air in an amount that is greater than the sum of the stack and burner air supply amounts, to cause the air to be pressurized.

The second air supplier may include a first valve to supply the stack air to the stack, and may be controlled, wherein the first valve supplies the stack air supply amount required for the stack.

The second air supplier may include a second valve to supply the burner air to the burner, and may be controlled, wherein the second valve supplies the burner air supply amount required for the burner.

In accordance with another aspect, a fuel cell system includes: a stack to generate energy through an electrochemical reaction of hydrogen with oxygen; a fuel treating unit including a burner, to produce hydrogen to be supplied to the stack; an air supplying unit to supply air containing the oxygen to the stack and the burner; and a main controller to control the air supplying unit, wherein the air supplying unit supplies a supply amount of stack air required in real time for the stack, and a supply amount of burner air required in real time for the burner.

The air supplying unit includes a first air supplier to control a total supply amount of the air supplied to the stack and the burner, and a second air supplier to control supply amounts of the air respectively supplied to the stack and the burner.

The first air supplier includes an air pump to supply the air to the stack and the burner. The amount of the supplied air may be equal to a sum of the air supply amount supplied to the stack as a supply amount of stack air and the air supply amount supplied to the burner as a supply amount of burner air.

The air pump may control the total supply amount of the air so that the amount of the supplied air is greater than the sum of the stack and burner air supply amounts, to cause the air to be pressurized.

The first air supplier may further include a first flow meter to detect the total air amount.

The first flow meter may send, to the main controller and a first controller, an air supply amount varying based on a variation in the internal pressure of the fuel cell system.

The first air supplier may further include the first controller to compare the actual air supply amount received from the first flow meter with the sum of the set point of the stack air supply amount and the set point of the burner air supply amount, and to determine an operation of the air pump based on a result of the comparison. Here, the "set points" mean target air supply amounts determined by the main controller and first controller, respectively.

The second air supplier may include a stack air supply line to control the supply amount of the stack air supplied to the stack, and a burner air supply line to control the supply amount of the burner air supplied to the burner.

The stack air supply line may include a first valve to control whether the stack air should be supplied to the stack.

The first valve may be a solenoid valve (or a proportional valve) connected to the air pump, to allow and prevent the supply of the stack air.

The burner air supply line may include a second valve to adjust a supply ratio of the burner air supplied to the burner.

The second valve may be a proportional valve connected to the air pump, to precisely control a flow rate of the burner air.

The burner air supply line may further include a second flow meter to detect a flow rate of air passing through the second valve.

The air cell system may further include a main controller to determine the stack air supply amount and the burner air supply amount, and to send values obtained based on the determination to the air supplying unit.

The main controller may determine the air supply amount of the air pump based on a set point of the stack air supply amount and a set point of the burner air supply amount, may compare the determined air supply amount of the air pump with an actual air supply amount of the air pump detected by the first flow meter, and may adjust a power of the air pump based on a result of the comparison.

The main controller may execute a comparison between the set point of the stack air supply amount and an actual stack air supply amount and a comparison between the set point of the burner air supply amount and an actual burner air supply amount, to control the opening/closing of the first valve and the opening degree of the second valve, respectively.

After the comparison between the actual burner air supply amount detected by the second flow meter and the set point of the burner air supply amount, the main controller may execute a proportional-integral (PI) control for the second valve, to adjust the burner air supply amount.

The main controller may calculate the difference between the actual air supply amount detected by the first flow meter and the actual air supply amount detected by the second flow meter, and may compare the calculated difference with the set point of the burner air supply amount, to control the power of the air pump.

In accordance with another aspect, an air supply method of a fuel cell system to generate energy through an electrochemical reaction of modified hydrogen with oxygen, includes: determining a supply amount of stack air supplied to a stack to perform electrochemical reaction of the hydrogen and the oxygen; determining a supply amount of burner air supplied to a burner to heat a reformer to perform a modification of the hydrogen; determining an air supply amount of an air pump based on the determined stack air supply amount and the determined burner air supply amount, and controlling an operation of the air pump in accordance with the determined air supply amount of the air pump; and controlling a flow rate of air supplied to the stack and a flow rate of air supplied to the burner, wherein the flow rates supply, in real time, the determined stack and burner air supply amounts.

The controlling the operation of the air pump may include operating the air pump wherein the air supply amount of the air pump is equal to a sum of the stack air supply amount and the burner air supply amount.

The controlling the operation of the air pump may include operating the air pump wyherein the air pump supplies the air in an amount greater than a sum of the stack air supply amount and the burner air supply amount, in a pressurized state, to adjust a total supply amount of the air supplied to the stack and the burner.

The controlling the operation of the air pump may include stopping the air pump when an air amount equal to a sum of the stack air supply amount and the burner air supply amount is supplied by an external supply pressure of the air.

The controlling, in real time, the flow rate of air supplied to the stack and the flow rate of air supplied to the burner may include providing a second valve and a flow meter in a burner air supply line, and controlling the flow rate of air supplied to the burner to supply the determined burner air supply amount in accordance with an adjustment of an opening degree of the second valve and a flow rate detection of the flow meter, and providing a first valve in a stack air supply line, and controlling the flow rate of air supplied to the stack to supply the determined stack air supply amount in accordance with opening/closing of the first valve and a detection of a difference between an air supply amount detected by the flow meter and an actual air supply amount of the air pump.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a schematic view to illustrate an electricity generating principle of a general fuel cell;
FIG. 2 is a block diagram illustrating a fuel cell system according to an embodiment of the present invention;
FIG. 3 is a block diagram illustrating a control configuration of the fuel cell system according to an embodiment of the present invention;
FIG. 4 is a block diagram illustrating a part of an air supplying unit according to an embodiment of the present invention;
FIG. 5 is a block diagram illustrating a main part of the fuel cell system according to an embodiment of the present invention;
FIG. 6 is a flow chart illustrating a method to control the total air supply amount of the fuel cell system in accordance with an embodiment of the present invention;
FIG. 7 is a flow chart illustrating a method to supply air to a stack and a burner via a plurality of valves in the fuel cell system in accordance with an embodiment of the present invention; and
FIG. 8 is a flow chart illustrating an operation to control the opening degree of a second valve in the fuel cell system in accordance with an embodiment of the present invention.

### DETAILED DESCRIPTION OF EMBODIMENTS

Reference will now be made in detail to the embodiments of the present invention, examples of which are illustrated in the accompanying drawings. The embodiments are described below to explain the present invention by referring to the figures.

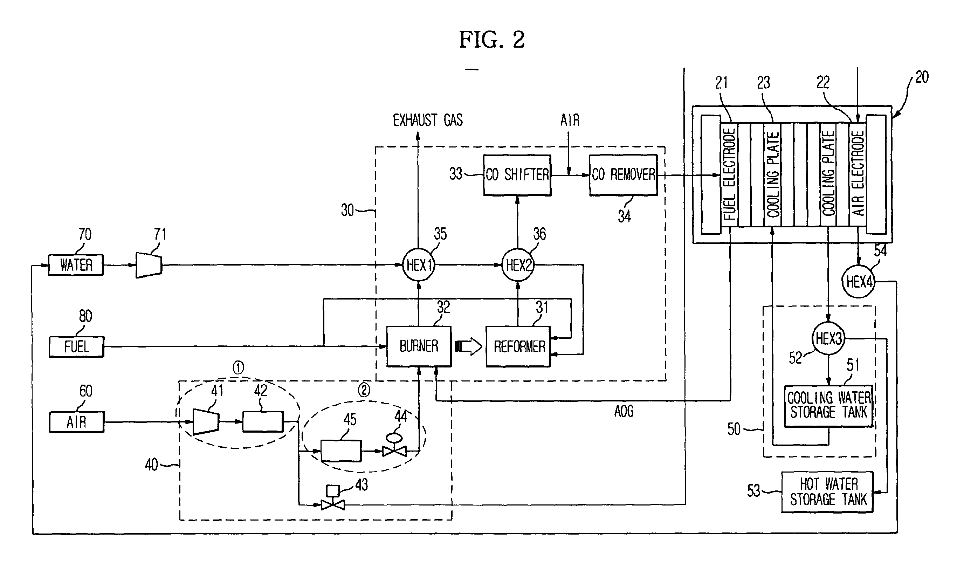

FIG. 2 is a block diagram illustrating a fuel cell system according to an embodiment of the present invention.

Referring to FIG. 2, the fuel cell system 10 according to the illustrated embodiment of the present invention includes a stack 20 to generate electricity, a fuel treating unit 30 to produce hydrogen to be supplied to the stack 20, an air supplying unit 40 to supply fuel 80 to the fuel treating unit 30, a cooling unit 50 to cool the stack 20, and balance-of-plant (BOP) units.

The stack 20 is an electricity generating device to directly convert chemical energy of hydrogen and oxygen contained in the fuel 80, namely, hydrocarbon-based fuel such as methanol, ethanol, or natural gas into electrical energy in accordance with an electrochemical reaction. The stack 20 has a laminated structure of several unit cells or several ten unit cells each including a membrane electrode assembly (MEA) and a separator. The stack 20 constitutes a fuel cell body. In FIG. 2, fuel electrodes 21, air electrodes 22, and cooling plates 24 are conceptually shown as being included in the stack 20 according to the illustrated embodiment of the present invention. Practically, the stack 20 has a structure wherein one cooling plate 23 is installed for every laminated structure of several unit cells each including an MEA in which one fuel electrode 21 and one air electrode 22 are respectively arranged at opposite sides of one electrolyte membrane.

In an electrochemical reaction, not only electricity, but also heat is generated. For this reason, it is necessary to continuously dissipate the generated heat to achieve a smooth operation of the stack 20. To this end, one cooling plate is installed in the stack 20 for every 5 to 6 unit cells to provide a channel through which heat-exchanging cooling water passes.

High-quality hydrogen is supplied to each fuel electrode 12, for an electrochemical reaction. The hydrogen is separated into hydrogen ions and electrons by a catalyst to generate electricity. Air 60 containing oxygen is supplied to each air electrode 22, for an electrochemical reaction. The oxygen is combined with the hydrogen ions and electrons generated from the corresponding fuel electrode 21, thereby producing water. Each cooling plate 23, which is arranged between adjacent unit cell groups each including several unit cells, provides a flow passage, through which cooling water for heat exchange flows, to dissipate heat generated together with electricity during the electrochemical reaction, and thus to appropriately control the temperature of the stack 20.

The fuel treating unit 30 is a modifier which produces hydrogen by modifying and purifying fuel, and supplies the hydrogen to the fuel electrodes 21 of the stack 20. The fuel treating unit 30 includes a reformer 31 to modify the hydrocarbon-based fuel 80, namely, modifier fuel, and thus, to produce high-quality hydrogen (modified gas), and a burner 32 to heat the reformer 31, and thus, to maintain the reaction temperature of the reformer 31 at an appropriate temperature. The fuel treating unit 30 also includes a carbon monoxide shifter 33 and a carbon monoxide remover 34 to reduce the amount of carbon monoxide produced as a byproduct during the production of hydrogen in the reformer 31, and first and second heat exchangers 35 and 36 to heat water 70 supplied to the reformer 31.

The reformer 31 is a section which is heated by the burner 32, to generate a substantial modification reaction. The reformer 31 modifies the hydrocarbon-based fuel 80, namely, reformer fuel, using a catalyst. For this function, the reformer fuel (for example, city gas for domestic use) for production of high-quality hydrogen is supplied to the reformer 31, together with water 70 (DI-water). The steam to carbon ratio (S/C) control to control the ratio of the reformer fuel to water, at which the reformer fuel and water are supplied to the reformer 31, is important for the control of the concentration of carbon monoxide fatally adversely affecting the stack 20. That is, the production of high-quality hydrogen is considerably influenced by the S/C control.

Hydrocarbon contains a sulfur compound. The catalyst may be easily poisoned by the sulfur compound. For this reason, it is necessary to remove the sulfur compound from the hydrocarbon-based fuel 80 before the hydrocarbon-based fuel 80 is supplied to the reformer 31. To this end, a desulfurizer is arranged at an inlet of the reformer 31, to cause the hydrocarbon-based fuel 80 to be subjected to a modification process.

The burner 32 generates heat while burning the hydrocarbon-based fuel 80, namely, burner fuel, such as methanol, ethanol, or natural gas. The heat generated from the burner 32 is transferred to the reformer 31, to promote a modification reaction while maintaining the reaction temperature of the reformer 31 at an appropriate temperature. For this function, the burner fuel for the control of the temperature of the reformer 31 is supplied to the burner 32, together with the oxygen-containing air 60. The lamda (the ratio of burner fuel to air) control to control the ratio of the burner fuel to air, at which the burner fuel and air are supplied to the burner, enables the reformer fuel to efficiently react in the reformer while maintaining a flame at the burner 32. That is, the production of high-quality hydrogen is considerably influenced by the lamda control.

The carbon monoxide shifter 33 is a section to reduce, to 5,000ppm (parts per million) or less, the amount of carbon monoxide produced as a by-product during the production of hydrogen in the reformer 31. In the carbon monoxide shifter 33, the following reaction occurs.

CO + H₂O ↔ CO₂ + H₂

Since carbon monoxide acts as a catalyst poison on the catalyst used for the fuel electrodes 21 of the stack 20, the modified fuel 80 should not be directly supplied to the stack 20. The modified fuel 80 may be subjected to a shift process for removal of carbon monoxide, wherein the amount of carbon monoxide produced from the modified fuel 80 may be reduced to 5,000 ppm or less.

The modification section of the fuel treating unit 30, which may require high-temperature heat of 500 to 700°C or more, namely, the reformer 31, receives required heat from the burner 32 using a hydrocarbon-based material as the fuel thereof. The monoxide shifter 33, to which hydrogencontaining gas emerging from the reformer 31 is supplied, removes carbon monoxide contained in hydrogen produced in the reformer 31, and additionally produces hydrogen. Thus, high-quality hydrogen is supplied to the stack 20 which, in turn, generates electricity and heat.

The carbon monoxide remover 34 is a section of the fuel treating unit 30 to reduce the amount of carbon monoxide within an allowable range through a preferential oxidation (PROX). In the carbon monoxide remover 34, the following reaction is carried out.

CO + 0.5O₂ ↔ CO₂

Through a forward reaction in the carbon monoxide remover 34, the amount of carbon monoxide is reduced because carbon monoxide is transformed into carbon dioxide. As the hydrogen produced from the reformer 31 passes through the carbon monoxide remover 34, the content of carbon monoxide in the hydrogen is reduced to 10 ppm or less. The carbon monoxide remover 34 may be unnecessary where the stack 20 is of a high temperature type having a tolerance to carbon monoxide. However, where the stack 20 is of a low temperature type, the carbon monoxide remover 34 may be required. High-quality hydrogen discharged from the carbon monoxide remover 34 is supplied to the stack 20.

The first and second heat exchangers 35 and 36 heat the water 70 supplied to the fuel treating unit 30 through a water supply pump 71, to supply the water 70 in a steam state to the reformer 31. The water steam reacts with carbon monoxide in the reformer 31 heated by the burner 32, thereby producing hydrogen.

The air supplying unit 40 functions to supply the oxygen-containing air 60 to the stack 20 and burner 32. The air supplying unit 40 includes a pump or air blower (hereinafter, referred to as an "air pump") 41 to pressurize the air 60 supplied from the external of the air supplying unit 40, and to supply the pressurized air, a first flow meter 42 to detect the actual air supply amount of the air pump 41, and a first valve 43 to control the supply start and end of the air 60 supplied, as stack air, to the stack 20. The air supplying unit 40 also includes a second valve 44 to control the supply ratio of the air 60 supplied to the burner 32, namely, the supply ratio of the burner air, and a second flow meter 45 to detect the actual supply amount of the burner air.

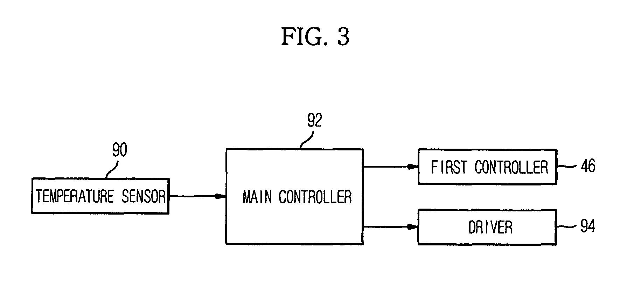

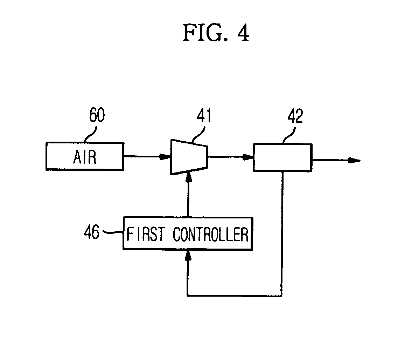

The air pump 41 is used to supply the total amount of air 60 required in the stack 20 and burner 32 based on a set point of the supply amount of stack air and a set point of the supply amount of burner air, which are determined in a main controller 92 (FIG. 3) for the performance and lamda control of the stack 20. The main controller 92 will be described later. The RPM of the air pump 41 is automatically controlled based on an environment (for example, the air supply pressure). That is, once the set point of the stack air supply amount and the set point of the burner air supply amount are determined, the total of the set stack air supply amount and burner air supply amount is supplied based on operation of the air pump 41. During this operation, the flow rate of the air 60 is controlled, taking into consideration an internal pressure loss, to prevent the air 60 from being unnecessarily pressurized with a positive pressure or a negative pressure. It may be possible to reduce the amount of energy consumed by the air supplying unit 40 by adjusting the power of the air pump 41. In this case, it may also be possible to secure the durability of the air pump 41. The operation of the air pump 41 may be controlled in accordance with a feed forward control through the main controller 92 using a hardware configuration of the air supplying unit 40 integrated with the air pump 41 (FIG. 4), namely, a first controller 46 (printed circuit board (PCB)), together with the first flow meter 42, and a feedback control through the first controller 46 to reduce the power of the air pump 41 based on the supply pressure of the air 60, and thus, to reduce the consumption of power. Control logics for the feed forward control and feedback control are disclosed in a book by Phillips Harbor entitled "Feedback Control Systems".

The first valve 43 is a solenoid valve connected to an outlet of the air pump 41 to constitute a supply line for the stack air, together with the first flow meter 42. The set point of the supply amount of the stack air, namely, the supply amount of the air 60 required for a desired durability of the stack 20 and a stable operation of the stack 20 through a system output stabilization control, is determined by the main controller 92. Practically, the supply amount of the stack air is varied in real time due to various factors such as a variation in the internal pressure of the system itself and environmental factors. The first valve 43 receives, from the main controller 92, a set point representing the supply amount of the stack air varying in real time to operate based on the received set point, to supply the required amount of the stack air to the reformer 31. Where the first valve 43 is a solenoid valve, the main operation of the first valve 43 is divided into an operation to start the supply of air to the stack 20 and an operation to stop the supply of air to the stack 20. On the other hand, where the first valve 43 is a proportional valve, the main operation of the first valve 43 is controlled to follow the set point of the supply amount of the stack air. To enable the stack 20 to generate an electrochemical reaction, air and hydrogen are supplied to the stack 20. That is, high-quality hydrogen gas is supplied to the fuel electrodes 21 of the stack 20, and the oxygen-containing air 60 is supplied to the air electrodes 22 of the stack 20. In this case, the supply of air and fuel to the stack 20 may cause a variation in the internal pressure of the stack 20. Consequently, the air supply amount may be influenced by the internal pressure variation. For a stable air supply control, accordingly, a stable supply of the air 60 to the stack 20 is achieved using the first valve 43 and first flow meter 42 arranged in the supply line for the stack air, together with the second flow meter 45.

The second valve 44 is a proportional valve connected to an outlet of the air pump 41 to constitute a supply line for the burner air, together with the second flow meter 45. The set point of the supply amount of the burner air, namely, the supply amount of the air 60 required for a stable operation of the fuel cell system through the lamda control is determined by the main controller 92. Practically, the supply amount of the burner air is varied in real time due to various factors such as a variation in the internal pressure of the system itself and a variation in air pressure. The second valve 44 receives, from the main controller 92, a set point representing the supply amount of the burner air varying in real time to operate to supply, in real time, a required supply amount of the burner air, and thus, to supply the required amount of the burner air to the burner 32. Thus, the second valve 44, which is a proportional valve, is used to control the supply amount of air supplied by the air pump 41. To enable the fuel treating unit 30 to generate a modification reaction, the fuel treating unit 30 is heated to a high temperature (about 500 to 700°C). To heat the fuel treating unit 30, the air 60 and fuel 80 are supplied to the burner 32. When appropriate amounts of air 60 and fuel 80 are supplied to the burner 32, it may be possible to prevent soot from being formed in the fuel treating unit 30, and to achieve an enhancement in the durability of the fuel treating unit 30. Satisfactory conditions of exhaust gas may be obtained only when the supply of the burner air is stable. In particular, it may be possible to avoid a failure of ignition of the burner 32 due to the supply of the burner air, and to avoid a failure of a flame upon a variation in the supply amount of the burner air made to control the power of the burner 32. To enable a temperature control for the reformer 31 through a control for the supply of the burner air, a set point control logic to control the temperature of the reformer 31 and a set point control logic to control the flow rate of the burner air may be connected to function as main/sub control logics.

Such a design of the air supplying unit 40 simplifies the BOP units, and thus, greatly contributes to providing economical effects. In particular, the internal feedback control of the air supplying unit 40 may reduce the mechanical influence on the air supplying unit 40.

The cooling unit 50 dissipates heat generated, together with electricity, during the electrochemical reaction process of the stack 20, to cool the stack 20. For this function, the cooling unit 50 includes a cooling water storage tank 51 and a third heat exchanger 52. Heat-exchange cooling water stored in the cooling water storage tank 51 absorbs heat from the stack 20 while passing through flow passages defined in the cooling plates 23 of the stack 20. The heat-absorbed cooling water is cooled by secondary cooling water in the third heat exchanger 52, and then is again circulated to the cooling plates 23 of the stack 20.

Reference numeral "53" designates a hot water storage tank which stores the secondary cooling water heat-exchanged with the cooling water circulating the stack 20, to allow the stored secondary cooling water to be used as hot water for domestic use or the like. Reference numeral "54" designates a fourth heat exchanger to heat water emerging from the air electrodes of the stack 20, and to recover the heated water to the water supply pump 71.

FIG. 3 is a block diagram illustrating a control configuration of the fuel cell system according to an embodiment of the present invention. For the control configuration, the fuel cell system includes a temperature sensor 90 and a driver 94, together with the main controller 92.

The temperature sensor 90 detects the reaction temperature of the reformer 31, and inputs a value representing the detected reaction temperature to the main controller 92.

The main controller 92 controls the overall operation of the fuel cell system 10 including the supply of the stack air and the supply of the burner air. The main controller 92 determines a set point of the supply amount of stack air and a set point of the supply amount of burner air for a stable system output and lamda control. The main controller 92 then determines a set point of the air supply amount of the air pump 41 based on the determined set point of the stack air supply amount and the determined set point of the burner air supply amount. The determined set point of the air supply amount of the air pump 41 is sent from the main controller 92 to the first controller 46. The first controller 46 compares the set point of the air supply amount of the air pump 41 with the actual air supply amount of the air pump 41 detected by the first flow meter 42, and adjusts the power of the air pump 41 based on the result of the comparison.

The main controller 92 may be configured to control the set point of the air supply amount of the air pump 41 such that the air supply amount of the air pump 41 is greater than the sum of the supply amount of stack air and the supply amount of burner air. In this case, a certain amount of air 60 remains because the stack air and burner air are supplied in amounts based on the set points thereof to the first and second valves 43 and 44, respectively. Due to the remaining fuel amount, the internal pressure of the fuel supply line increases. As a result, it is possible to reduce the supply pulsation of the air 60 occurring due to the air pump 41.

For the control of the air supply amount of the stack 20, the main controller 92 controls the opening/closing of the first valve 43 such that the stack air is supplied to the stack 20 via the first valve 43 in an amount based on the set point of the stack air supply amount. The main controller 92 derives a difference between the air supply amount of the air pump 41 detected by the first flow meter 42 and an actual burner air supply amount detected by the second flow meter 45, and determines whether the stack air is supplied in a target air supply amount. In accordance with the result of the determination, the main controller 92 controls the opening/closing of the first valve 43, and controls the set point of the air supply amount of the air pump 41.

In addition, the main controller 92 compares a set point of the temperature of the reformer 31 determined, for the lamda control, in accordance with a load, with the actual temperature of the reformer 31 detected by the temperature sensor 90. In accordance with the result of the comparison, the main controller 92 determines the set point of the burner air supply amount. Thereafter, the main controller 92 compares the determined set point of the burner air supply amount with the actual burner air supply amount detected by the second flow meter 45. Based on the result of the comparison, the main controller 92 controls the opening degree of the second valve 44, using the PI control system, such that the burner air is supplied to the burner 32 via the second valve 44 in an amount corresponding to the determined set point of the burner air supply amount.

The driver 94 operates the air pump 41, first valve 43, and second valve 44 in accordance with drive control signals from the main controller 92.

FIG. 4 is a block diagram illustrating a part of the air supplying unit according to an embodiment of the present invention.

Referring to FIG. 4, the first controller 46 is a PCB having a hardware configuration integrated with the air pump 41. The first controller 46 receives the set point of the air supply amount of the air pump 41 from the main controller 92, compares the received set point with the actual air supply amount of the air pump 41 detected by the first flow meter 42, and adjusts the power of the air pump 41 based on the result of the comparison.

Hereinafter, the fuel cell system having the above-described configuration, operations of an air supply method thereof, and functions and effects thereof will be described.

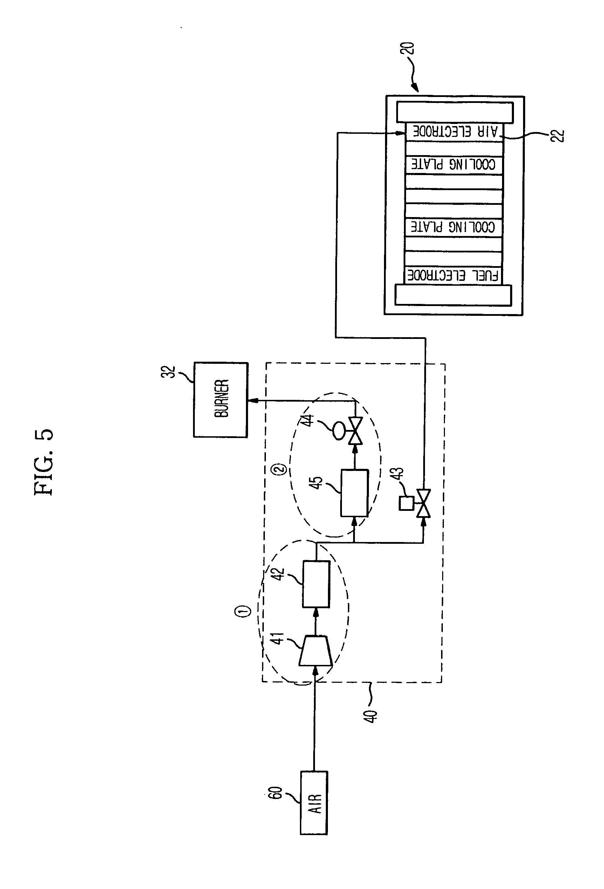

FIG. 5 is a block diagram illustrating a main part of the fuel cell system according to an embodiment of the present invention. FIG. 5 illustrates a configuration of the air supplying unit 40 enabling the fuel cell system 10 to operate efficiently and stably against pressure loss and pulsation.

Referring to FIG. 5, the air 60 is supplied, as stack air, to the stack 20 via the air pump 41 and first valve 43, together with high-quality hydrogen. The air 60 is also supplied, as burner air, to the burner 32 via the air pump 41 and second valve 44, together with the fuel 80.

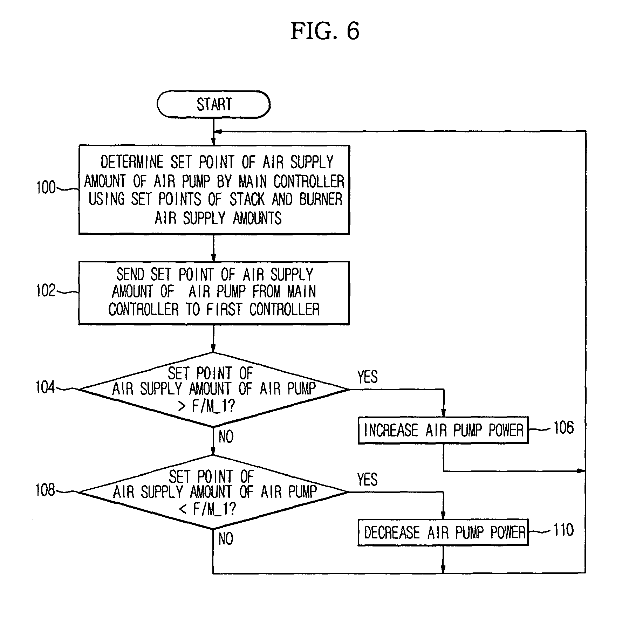

Now, the control method to supply the air 60, as stack air and burner air, to the stack 20 and burner 32, using the configuration of the air supplying unit 40 shown in FIG. 5 will be described with reference to FIGS. 6 to 9.

FIG. 6 is a flow chart illustrating a method to control the total air supply amount of the fuel cell system in accordance with an embodiment of the present invention. The illustrated method controls the supply of the air 60, using an air supply line (air pump and first flow meter) designated by "①" in FIG. 5.

Referring to FIG. 6, the main controller 92 determines a set point of the supply amount of stack air for a stable system output control of the fuel cell system 10 and a set point of the supply amount of burner air for a stable lamda control of the fuel cell system 10. Thereafter, the main controller 92 determines a set point of the air supply amount of the air pump 41 based on the determined set point of the stack air supply amount and the determined set point of the burner air supply amount, and then sends the determined set point of the air supply amount of the air pump 41 to the first controller 46 (100 to 102).

The first controller 46 compares the set point of the air supply amount of the air pump 41 received from the main controller 92 with an actual air supply amount of the air pump 41, F/M_1, detected by the first flow meter 42. When the received set point of the air supply amount of the air pump 41 is greater than the detected actual air supply amount of the air pump 41, F/M_1 (104), the first controller 46 increases the power of the air pump 41, to enable the air 60 to be supplied to the stack 20 and burner 32 in amounts corresponding to the set points of reformer and burner air supply amounts, respectively (106).

On the other hand, when the received set point of the air supply amount of the air pump 41 is less than the detected actual air supply amount of the air pump 41, F/M_1 (108), the first controller 46 decreases the power of the air pump 41, to enable the air 60 to be supplied to the stack 20 and burner 32 in amounts corresponding to the set points of reformer and burner air supply amounts, respectively (110).

Meanwhile, when the received set point of the air supply amount of the air pump 41 is equal to the detected actual air supply amount of the air pump 41, F/M_1, the first controller 46 feeds back to operation 100, to receive an actual air supply amount of the air pump 41, F/M_1, newly detected by the first flow meter 42, and to compare the received actual air supply amount with the received set point of the air supply amount of the air pump 41. Based on the result of the comparison, the first controller 46 executes the associated operations following operation 100.

In accordance with the fuel supply method of the present invention shown in FIG. 6, the influence of the internal pressure on the operation of the fuel cell system 10 is reduced. Accordingly, the influence of the environment on the operation of the fuel cell system 10 is reduced.

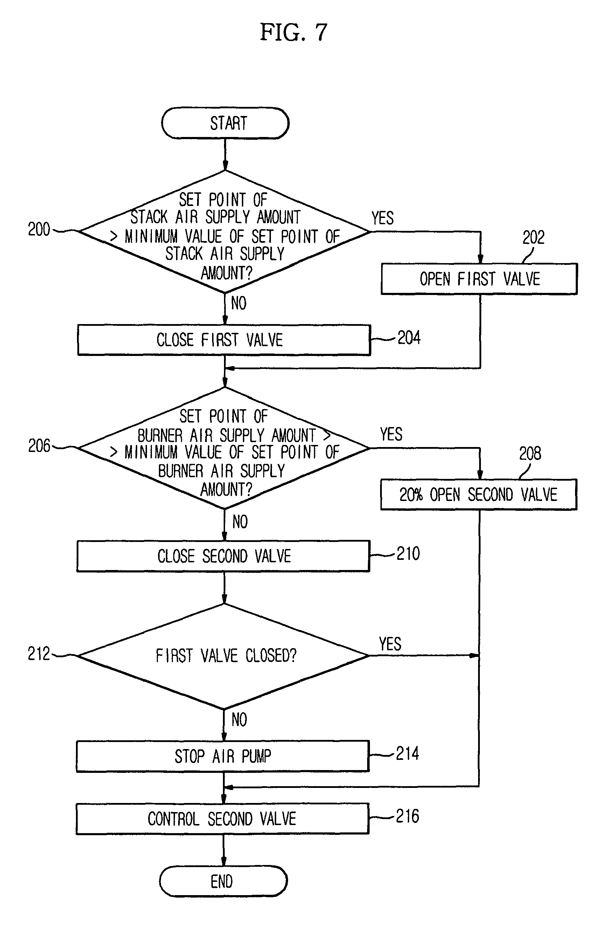

FIG. 7 is a flow chart illustrating a method to supply air to the burner and reformer via a plurality of valves in the fuel cell system in accordance with an embodiment of the present invention. In accordance with this method, the main controller 92 determines the set points of the reformer and burner air supply amounts through a performance control of the stack 20 and a lamda control, respectively, to control the opening/closing of the first valve 43 and to adjust the opening degree of the second valve 44.

Referring to FIG. 7, the main controller 92 compares the set point of the stack air supply amount with a predetermined minimum value of the set point of the stack air supply amount (200). When the set point of the stack air supply amount is greater than the predetermined minimum value of the set point of the stack air supply amount, the main controller 92 opens the first valve 43 such that the air 60 is supplied in real time. Thereafter, the main controller 92 controls the air pump 41 while comparing the set point of the stack air supply amount with the actual air supply amount of the stack 20 determined through the first and second flow meters 42 and 45 (202).

When it is determined at operation 200 that the determined set point of the stack air supply amount is not greater than the predetermined minimum value of the set point of the stack air supply amount, the main controller 92 closes the first valve 43 because it is unnecessary to supply the fuel to the stack 20 (204).

Subsequently, the main controller 92 compares the set point of the burner air supply amount determined through the lamda control with the predetermined minimum value of the set point of the burner air supply amount (206). When the determined set point of the burner air supply amount is greater than the predetermined minimum value of the set point of the burner air supply amount, the main controller 92 adjusts the opening degree of the second valve 44 to be 20%, such that the air 60 is supplied in real time. Thereafter, the main controller 92 controls the second valve 44 such that the actual air supply amount of the burner 32 determined through the second flow meter 45 is the determined set point (target value), while comparing the actual fuel supply amount of the burner 32 with the determined set point (208). The opening degree of 20% is an opening degree of the second valve 44 set when the second valve 44 is initially opened. The second valve 44 may be initially opened at an opening degree of 10%.

On the other hand, when it is determined at operation 206 that the determined set point of the burner air supply amount is not greater than the predetermined minimum value of the set point of the burner air supply amount, the main controller 92 closes the second valve 44 because it is unnecessary to supply the air to the burner 32 (210). If the first valve 43 is also in a closed state in this case (212), the main controller 92 stops the air pump 41 because it is unnecessary to supply the stack air and burner air (214).

Thereafter, the main controller 92 returns to a loop to precisely control the flow rates of the first and second valves 43 and 44 (216).

In accordance with the fuel supply method of the present invention shown in FIG. 7, it is possible to enhance the durability and efficiency of the fuel cell system 10 because the supply of the air 60 is more efficiently and precisely achieved during the start-up and operation of the stack 20.

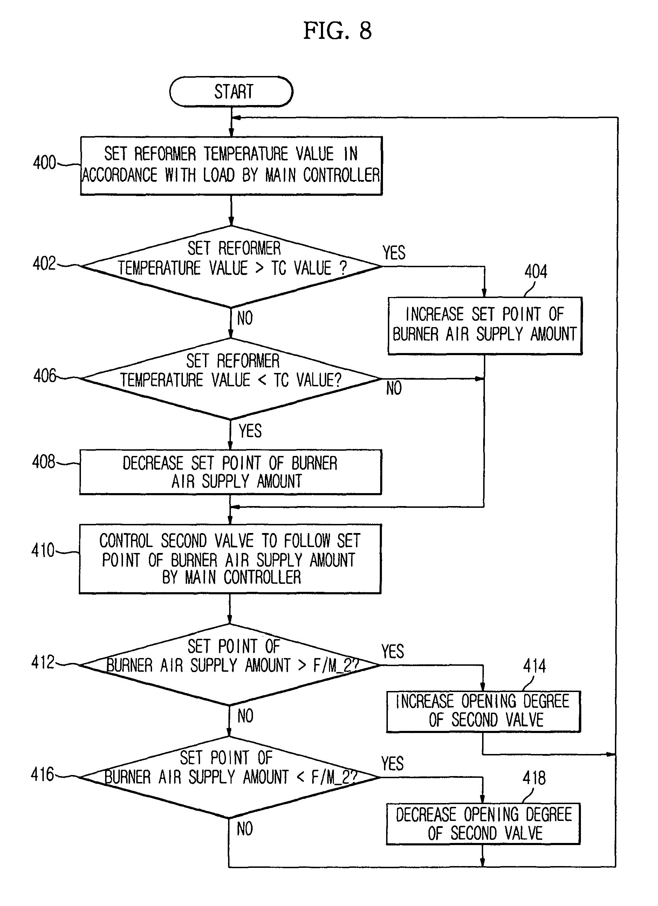

FIG. 8 is a flow chart illustrating an operation to control the opening degree of the second valve in the fuel cell system in accordance with an embodiment of the present invention. The illustrated method controls the supply of the air 60, using a burner air supply line (second valve and second flow meter) designated by "②" in FIG. 5.

Referring to FIG. 8, the main controller 92 sets a reformer temperature value in accordance with a load, to achieve a stable lamda control, and determines a set point of a burner air supply amount required in accordance with the set reformer temperature (400).

Thereafter, the main controller 92 compares the reformer temperature value set in accordance with the load, with the reformer temperature value (TC value) detected by the temperature sensor 90 (402). When the set reformer temperature value is greater than the reformer temperature value (TC value), the main controller 92 increases the set point of the burner air supply amount, to increase the supply amount of the burner air (404). This is because the supply amount of fuel to the burner 32 is increased for an increase in reformer temperature value, and the burner air supply amount is increased based on the increased burner fuel supply amount for a lamda control.

When it is determined at operation 402 that the set reformer temperature value is not greater than the reformer temperature value (TC value), the main controller 92 determines whether the set reformer temperature value is less than the reformer temperature value (TC value) (406). When the set reformer temperature value is not less than the reformer temperature value (TC value), the main controller 92 proceeds to operation 410, and executes operation 410 and subsequent operation.

On the other hand, when it is determined at operation 406 that the set reformer temperature value is less than the reformer temperature value (TC value), the main controller decreases the set point of the burner air supply amount, to correspondingly control the supply of the burner air (408).

Thereafter, the main controller 92 controls the opening degree of the second valve 44 to supply the set point of the burner fuel supply amount adjusted in accordance with the reformer temperature value (410). The main controller 92 compares the set point of the burner air supply amount with the actual burner air supply amount F/M_2 detected by the second flow meter 45 (412).

When it is determined at operation 412 that the set point of the burner air supply amount is greater than the actual burner air supply amount F/M_2, the main controller 92 executes a PI control to increase the opening degree of the second valve 44, to precisely control the supply of the burner air (414).

When it is determined at operation 412 that the set point of the burner air supply amount is not greater than the actual burner air supply amount F/M_2, the main controller 92 determines whether the set point of the burner air supply amount is less than the actual burner air supply amount F/M_2 (416). When the set point of the burner air supply amount is not less than the actual burner air supply amount F/M 2, the main controller 92 is fed back to operation 400, and executes operation 400 and subsequent operations.

On the other hand, when it is determined at operation 416 that the set point of the burner air supply amount is less than the actual burner air supply amount F/M_2, the main controller 92 executes a PI control to decrease the opening degree of the second valve 44, to precisely control the supply of the burner air (418).

In accordance with the air supply method of the present invention illustrated in FIG. 8, air 60 is constantly supplied in response to a variation in pressure occurring in the fuel cell system 10.

Although a few embodiments of the present general inventive concept have been shown and described, it will be appreciated by those skilled in the art that changes may be made in these embodiments without departing from the principles of the invention, the scope of which is defined in the appended claims and their equivalents.

## Claims

1. A fuel cell system (10) comprising:
a fuel treating unit (30) comprising a burner (32), to produce modified gas;
a stack (20) to receive the modified gas from the fuel treating unit to generate energy;
an air supplying unit (40) to supply air to the stack and the burner, wherein the air supplying unit comprises a first air supplier to control a total supply amount of the air supplied to the stack and the burner, and a second air supplier to control air supply amounts respectively supplied to the stack and the burner; and
a main controller (92) to determine an air supply amount required for a real-time operation of the stack and a real-time operation of the burner, and to control the air supplying unit to supply the determined air supply amount and,
wherein the first air supplier comprises an air pump (41) to supply the air to the stack and the burner,
wherein the first air supplier further comprises a first controller (46) to determine an operation of the air pump, based on an external air supply amount of the air,
wherein the main controller (92) determines the air supply amount of the air pump based on the determined air supply amount and, the first controller (46) compares the determined air supply amount of the air pump with an actual air supply amount of the air pump and adjusts a power of the air pump based on a result of the comparison.

2. The fuel cell system according to claim 1, wherein the air pump supplies an air amount equal to a sum of the air supply amount supplied to the stack as a supply amount of stack air and the air supply amount supplied to the burner as a supply amount of burner air,

3. The fuel cell system according to claims 1 or 2, wherein the first air supplier controls the total supply amount of the air, wherein the air pump supplies the air in an amount greater than the sum of the stack and burner air supply amounts, to cause the air to be pressurized.

4. The fuel cell system according to claim 1, wherein the second air supplier comprises a valve (43) to supply the stack air to the stack, and the valve controls the flow of stack air to supply the stack air supply amount required for the stack.

5. The fuel cell system according to claim 1, wherein the second air supplier comprises a valve (44) to supply the burner air to the burner, and the valve controls the flow of the burner air to supply the burner air supply amount required for the burner.

6. The fuel cell system according to claim 1, wherein the main controller determines the air supply amount of the air pump based on a set point of the stack air supply amount and a set point of the burner air supply amount, compares the determined air supply amount of the air pump with an actual air supply amount of the air pump detected by the first flow meter, and adjusts a power of the air pump based on a result of the comparison.

7. The fuel cell system according to claim 4, wherein the second air supplier comprises a stack air supply line to control the supply amount of the stack air supplied to the stack, and a burner air supply line to control the supply amount of the burner air supplied to the burner.

8. The fuel cell system according to claim 7, wherein:
the stack air supply line comprises a first valve (43) to control whether the stack air should be supplied to the stack; and
the burner air supply line comprises a second valve (44) to adjust a supply ratio of the burner air supplied to the burner, and a second flow meter (45) to detect a flow rate of air passing through the second valve.

9. An air supply method of a fuel cell system to generate energy through an electrochemical reaction of modified hydrogen with oxygen using the fuel cell system according to one of the preceding claims, comprising:
determining a supply amount of stack air supplied to a stack to perform electrochemical reaction of the hydrogen and the oxygen;
determining a supply amount of burner air supplied to a burner to heat a reformer to perform a modification of the hydrogen;
determining an air supply amount of an air pump based on the determined stack air supply amount and the determined burner air supply amount, and controlling an operation of the air pump based on the determined air supply amount of the air pump; and
controlling a flow rate of air supplied to the stack and a flow rate of air supplied to the burner, wherein the flow rates supply, in real time, the determined stack and burner air supply amounts and, wherein the controlling, in real time, the flow rate of air supplied to the stack and the flow rate of air supplied to the burner comprises: comparing the determined air supply amount of the air pump with an actual air supply amount of the air pump; and adjusting a power of the air pump based on a result of the comparison.

10. The air supply method according to claim 9, wherein the controlling the operation of the air pump comprises operating the air pump to cause the air supply amount of the air pump to be equal to a sum of the stack air supply amount and the burner air supply amount.

11. The air supply method according to claim 9, wherein the controlling the operation of the air pump comprises operating the air pump to cause the air pump to supply the air in an amount greater than a sum of the stack air supply amount and the burner air supply amount, in a pressurized state, to adjust a total supply amount of the air supplied to the stack and the burner.

12. The air supply method according to claim 9, wherein the controlling the operation of the air pump comprises stopping the air pump when an air amount equal to a sum of the stack air supply amount and the burner air supply amount is supplied by an external supply pressure of the air.

13. The air supply method according to claim 9, wherein the controlling, in real time, the flow rate of air supplied to the stack and the flow rate of air supplied to the burner comprises:
providing a second valve and a flow meter in a burner air supply line, and controlling the flow rate of air supplied to the burner to supply the determined burner air supply amount based on an adjustment of an opening degree of the second valve and a flow rate detection of the flow meter; and
providing a first valve in a stack air supply line, and controlling the flow rate of air supplied to the stack to supply the determined stack air supply amount based on opening/closing of the first valve and a detection of a difference between an air supply amount detected by the flow meter and an actual air supply amount of the air pump.

## Patentansprüche

1. Brennstoffzellensystem (10), umfassend:
eine Brennstoffaufbereitungseinheit (30), die einen Brenner (32) umfasst, um modifiziertes Gas herzustellen;
einen Stapel (20), der das modifizierte Gas aus der Brennstoffaufbereitungseinheit aufnimmt, um Energie zu erzeugen;
eine Luftzuführeinheit (40), die dem Stapel und dem Brenner Luft zuführt, wobei die Luftzuführeinheit eine erste Luftzuführeinrichtung, um die Gesamtzuführmenge der Luft, die dem Stapel und dem Brenner zugeführt wird, zu steuern, und eine zweite Luftzuführeinrichtung umfasst, um die Luftzuführmengen zu steuern, die jeweils dem Stapel und dem Brenner zugeführt werden; und
eine Hauptsteuereinheit (92), die eine Luftzuführmenge bestimmt, die für einen Echtzeitbetrieb des Stapels und einen Echtzeitbetrieb des Brenners erforderlich ist, und die Luftzuführeinheit steuert, um die bestimmte Zuführmenge zuzuführen,
wobei die erste Luftzuführeinrichtung eine Luftpumpe (41) umfasst, um die Luft dem Stapel und dem Brenner zuzuführen,
wobei die erste Luftzuführeinheit weiterhin eine erste Steuereinheit (46) umfasst, um einen Betrieb der Luftpumpe auf der Basis einer Außenluftzuführmenge der Luft zu bestimmen, und
wobei die Hauptsteuereinheit (92) die Luftzuführmenge der Luftpumpe auf der Basis der bestimmten Luftzuführmenge bestimmt und die erste Steuereinheit (46) die bestimmte Luftzuführmenge der Luftpumpe mit einer tatsächlichen Luftzuführmenge der Luftpumpe vergleicht und eine Leistung der Luftpumpe auf der Basis des Vergleichsergebnisses anpasst.

2. Brennstoffzellensystem nach Anspruch 1, bei dem die Luftpumpe eine Luftmenge zuführt, die gleich einer Summe der Luftzuführmenge, die dem Stapel als Zuführmenge von Stapelluft zugeführt wird, und der Luftzuführmenge ist, die dem Brenner als Zuführmenge von Brennerluft zugeführt wird.

3. Brennstoffzellensystem nach Anspruch 1 oder 2, bei dem die erste Luftzuführeinrichtung die Gesamtzuführmenge der Luft steuert, wobei die Luftpumpe die Luft in einem Umfang zuführt, der größer ist als die Summe der Stapel- und Brennerluftzuführmengen, um zu bewirken, dass die Luft unter Druck gesetzt wird.

4. Brennstoffzellensystem nach Anspruch 1, bei dem die zweite Luftzuführeinrichtung ein Ventil (43) umfasst, um die Stapelluft dem Stapel zuzuführen, und das Ventil den Fluss der Stapelluft steuert, um die Stapelluftzuführmenge zuzuführen, die für den Stapel erforderlich ist.

5. Brennstoffzellensystem nach Anspruch 1, bei dem die zweite Luftzuführeinrichtung ein Ventil (44) umfasst, um die Brennerluft dem Brenner zuzuführen, und das Ventil den Fluss der Brennerluft steuert, um die Brennerluftzuführmenge zuzuführen, die für den Brenner erforderlich ist.

6. Brennstoffzellensystem nach Anspruch 1, bei dem die Hauptsteuereinheit die Luftzuführmenge der Luftpumpe auf der Basis eines Einstellpunktes der Stapelluftzuführmenge und eines Einstellpunktes der Brennerluftzuführmenge bestimmt, die bestimmte Luftzuführmenge der Luftpumpe mit einer tatsächlichen Luftzuführmenge der Luftpumpe vergleicht, die von dem ersten Durchflussmesser erfasst wird, und eine Leistung der Luftpumpe auf der Basis eines Vergleichsergebnisses einstellt.

7. Brennstoffzellensystem nach Anspruch 4, bei dem die zweite Luftzuführeinrichtung eine Stapelzuführleitung, um die Zuführmenge der Stapelluft, die dem Stapel zugeführt wird, zu steuern, und eine Brennerzuführluftleitung umfasst, um die Zuführmenge der Brennerluft zu steuern, die dem Brenner zugeführt wird.

8. Brennstoffzellensystem nach Anspruch 7, bei dem:
die Stapelluftzuführleitung ein erstes Ventil (43) umfasst, das steuert, ob die Stapelluft dem Stapel zugeführt werden soll; und
die Brennerzuführleitung ein zweites Ventil (44), das ein Zuführverhältnis der Brennerluft anpasst, die dem Brenner zugeführt wird, und einen zweiten Durchflussmesser (45) umfasst, der eine Flussrate der Luft erfasst, die durch das zweite Ventil fließt.

9. Luftzuführverfahren eines Brennstoffzellensystems, um Energie durch elektrochemische Reaktion von modifiziertem Wasserstoff mit Sauerstoff mit Hilfe des Brennstoffzellensystems nach einem der vorhergehenden Ansprüche zu erzeugen, umfassend:
Bestimmen einer Zuführmenge von Stapelluft, die einem Stapel zugeführt wird, um eine elektrochemische Reaktion von Wasserstoff und Sauerstoff auszuführen;
Bestimmen einer Zuführmenge von Brennerluft, die einem Brenner zugeführt wird, um einen Reformer zu erwärmen, um eine Modifikation des Wasserstoffes auszuführen;
Bestimmen einer Luftzuführmenge einer Luftpumpe auf der Basis der bestimmten Stapelluftzuführmenge und der bestimmten Brennerluftzuführmenge sowie Steuern eines Betriebs der Luftpumpe auf der Basis der bestimmten Luftzuführmenge der Luftpumpe; und
Steuern einer Flussrate von Luft, die dem Stapel zugeführt wird, und einer Flussrate von Luft, die dem Brenner zugeführt wird, wobei die Flussraten in Echtzeit die bestimmten Stapel- und Brennerluftzuführmengen zuführen und die Echtzeitsteuerung der Flussrate der Luft, die dem Stapel zugeführt wird, und der Flussrate der Luft, die dem Brenner zugeführt wird, umfasst: Vergleichen der bestimmten Luftzuführmenge der Luftpumpe mit einer tatsächlichen Luftzuführmenge der Luftpumpe und Anpassen einer Leistung der Luftpumpe auf der Basis eines Vergleichsergebnisses.

10. Luftzuführverfahren nach Anspruch 9, bei dem das Steuern des Betriebs der Luftpumpe das Betätigen der Luftpumpe derart umfasst, dass bewirkt wird, dass die Luftzuführmenge der Luftpumpe gleich einer Summe der Stapelluftzuführmenge und der Brennerluftzuführmenge ist.

11. Luftzuführverfahren nach Anspruch 9, bei dem das Steuern des Betriebs der Luftpumpe das Betätigen der Luftpumpe derart umfasst, dass bewirkt wird, dass die Luftpumpe die Luft in einer Menge zuführt, die größer ist als eine Summe der Stapelluftzuführmenge und der Brennerluftzuführmenge in einem unter Druck gesetzten Zustand, um eine Gesamtzuführmenge der Luft anzupassen, die dem Stapel und dem Brenner zugeführt wird.

12. Luftzuführverfahren nach Anspruch 9, bei dem das Steuern des Betriebs der Luftpumpe das Stoppen der Luftpumpe umfasst, wenn eine Luftmenge gleich einer Summe der Stapelluftzuführmenge und der Brennerluftzuführmenge durch einen externen Zuführdruck der Luft zugeführt wird.

13. Luftzuführverfahren nach Anspruch 9, bei dem die Echtzeitsteuerung der Flussrate der Luft, die dem Stapel zugeführt wird, und der Flussrate der Luft, die dem Brenner zugeführt wird, umfasst:
Bereitstellen eines zweiten Ventils und eines Durchflussmessers in einer Brennerzuführleitung sowie Steuern der Flussrate der Luft, die dem Brenner zugeführt wird, um die bestimmte Brennerluftzuführmenge auf der Basis einer Anpassung eines Öffnungsgrades des zweiten Ventils und einer Flussratenerfassung des Durchflussmessers zuzuführen; und
Bereitstellen eines ersten Ventils in einer Stapelzuführleitung sowie Steuern der Flussrate der Luft, die dem Stapel zugeführt wird, um die bestimmte Stapelluftzuführmenge auf der Basis des Öffnens/Schließens des ersten Ventils und einer Erfassung einer Differenz zwischen einer Luftzuführmenge, die von dem Durchflussmesser gemessen wird, und einer tatsächlichen Luftzuführmenge der Luftpumpe zuzuführen.

## Revendications

1. Système de pile à combustible (10) comprenant :
une unité de traitement de combustible (30) comprenant un brûleur (32) pour produire un gaz modifié ;
un empilement (20) destiné à recevoir le gaz modifié provenant de l'unité de traitement de combustible pour générer de l'énergie ;
une unité d'alimentation en air (40) pour fournir de l'air à l'empilement et au brûleur, dans lequel l'unité d'alimentation en air comprend un premier dispositif d'alimentation en air pour commander la quantité de fourniture totale de l'air fourni à l'empilement et au brûleur, et un second dispositif d'alimentation en air pour commander respectivement les quantités d'alimentation en air fourni à l'empilement et au brûleur ; et
un contrôleur principal (92) pour déterminer la quantité d'alimentation en air nécessaire pour le fonctionnement en temps réel de l'empilement et le fonctionnement en temps réel du brûleur et pour commander l'unité d'alimentation en air pour fournir la quantité d'alimentation en air déterminée et
dans lequel le premier dispositif d'alimentation en air comprend une pompe à air (41) pour fournir de l'air à l'empilement et au brûleur,
dans lequel le premier dispositif d'alimentation en air comprend en outre un premier contrôleur (46) pour déterminer le fonctionnement de la pompe à air, en se basant sur la quantité d'alimentation en air externe de l'air,
dans lequel le contrôleur principal (92) détermine la quantité d'alimentation en air de la pompe à air en se basant sur la quantité d'alimentation en air déterminée et, le premier contrôleur (46) compare la quantité d'alimentation en air déterminée de la pompe à air avec la quantité d'alimentation en air réelle de la pompe à air et règle la puissance de la pompe à air en se basant sur le résultat de la comparaison.

2. Système de pile à combustible selon la revendication 1, dans lequel la pompe à air fournit une quantité d'air égale à la somme de la quantité d'alimentation en air fournie à l'empilement en tant que quantité d'alimentation en air d'empilement et la quantité d'alimentation en air fournie au brûleur en tant que quantité d'alimentation en air de brûleur.

3. Système de pile à combustible selon les revendications 1 ou 2 dans lequel le premier dispositif d'alimentation en air commande la quantité de fourniture totale de l'air, dans lequel la pompe à air fournit l'air en une quantité supérieure à la somme des quantités d'alimentation en air de l'empilement et du brûleur, pour provoquer la pressurisation de l'air.

4. Système de pile à combustible selon la revendication 1 dans lequel le second dispositif d'alimentation en air comprend une vanne (43) destinée à fournir l'air d'empilement à l'empilement et la vanne commande l'écoulement de l'air d'empilement pour fournir la quantité d'alimentation en air d'empilement nécessaire pour l'empilement.

5. Système de pile à combustible selon la revendication 1 dans lequel le second dispositif d'alimentation en air comprend une vanne (44) pour fournir l'air de brûleur au brûleur et la vanne commande l'écoulement de l'air de brûleur pour fournir la quantité d'alimentation en air de brûleur nécessaire pour le brûleur.

6. Système de pile à combustible selon la revendication 1 dans lequel le contrôleur principal détermine la quantité d'alimentation en air de la pompe à air en se basant sur un point de consigne de la quantité d'alimentation en air d'empilement et un point de consigne de la quantité d'alimentation en air de brûleur, compare la quantité d'alimentation en air déterminée de la pompe à air avec la quantité d'alimentation en air réelle de la pompe à air détectée par le premier débitmètre et règle la puissance de la pompe à air en se basant sur le résultat de la comparaison.

7. Système de pile à combustible selon la revendication 4 dans lequel le second dispositif d'alimentation en air comprend une ligne d'alimentation en air d'empilement pour commander la quantité de fourniture de l'air d'empilement fournie à l'empilement et une ligne d'alimentation en air de brûleur pour commander la quantité d'alimentation en air de brûleur fournie au brûleur.

8. Système de pile à combustible selon la revendication 7 dans lequel :
la ligne d'alimentation en air d'empilement comprend une première vanne (43) pour commander si l'air d'empilement doit être fourni à l'empilement ; et
la ligne d'alimentation en air de brûleur comprend une seconde vanne (44) pour régler le rapport de fourniture de l'air de brûleur fourni au brûleur et un second débitmètre (45) pour détecter le débit de l'air traversant la seconde vanne.

9. Procédé d'alimentation en air d'un système de pile à combustible pour générer de l'énergie au moyen d'une réaction électrochimique d'hydrogène modifié avec de l'oxygène en utilisant le système de pile à combustible selon l'une des revendications précédentes, comprenant :
la détermination d'une quantité d'alimentation en air d'empilement fourni à un empilement pour exécuter une réaction électrochimique de l'hydrogène et de l'oxygène ;
la détermination d'une quantité d'alimentation en air de brûleur fourni à un brûleur pour chauffer un dispositif de reformation pour effectuer une modification de l'hydrogène ;
la détermination d'une quantité d'alimentation en air d'une pompe à air en se basant sur la quantité d'alimentation en air d'empilement déterminée et la quantité d'alimentation en air de brûleur déterminée et la commande du fonctionnement de la pompe à air en se basant sur la quantité d'alimentation en air déterminée de la pompe à air ; et
la commande du débit de l'air fourni à l'empilement et du débit de l'air fourni au brûleur, dans lequel les débits fournissent en temps réel les quantités d'alimentation en air d'empilement et de brûleur déterminées et, dans lequel la commande, en temps réel, du débit d'air fourni à l'empilement et du débit d'air fourni au brûleur comprend : la comparaison de la quantité d'alimentation en air déterminée de la pompe à air avec la quantité d'alimentation en air réelle de la pompe à air ; et le réglage de la puissance de la pompe à air en se basant sur le résultat de la comparaison.

10. Procédé d'alimentation en air selon la revendication 9 dans lequel la commande du fonctionnement de la pompe à air comprend le fonctionnement de la pompe à air de manière à rendre la quantité d'alimentation en air de la pompe à air égale à la somme de la quantité d'alimentation en air de l'empilement et de la quantité d'alimentation en air du brûleur.

11. Procédé d'alimentation en air selon la revendication 9 dans lequel la commande du fonctionnement de la pompe à air comprend le fonctionnement de la pompe à air de manière à faire fournir par la pompe à air l'air en une quantité plus grande que la somme de la quantité d'alimentation en air de l'empilement et de la quantité d'alimentation en air du brûleur, dans un état pressurisé, pour régler la quantité de fourniture totale de l'air fourni à l'empilement et au brûleur.

12. Procédé d'alimentation en air selon la revendication 9 dans lequel la commande du fonctionnement de la pompe à air comprend l'arrêt de la pompe à air lorsque la quantité d'air égale à la somme de la quantité d'alimentation en air de l'empilement et la quantité d'alimentation en air du brûleur est fournie par une pression de fourniture externe de l'air.

13. Procédé d'alimentation en air selon la revendication 9 dans lequel la commande en temps réel du débit d'air fourni à l'empilement et du débit d'air fourni au brûleur comprend :
la fourniture d'une seconde vanne et d'un débitmètre dans une ligne d'alimentation en air de brûleur et la commande du débit de l'air fourni au brûleur pour fournir la quantité d'alimentation en air de brûleur déterminée en se basant sur le réglage du degré d'ouverture de la seconde vanne et la détection du débit du débitmètre, et
la fourniture d'une première vanne dans une ligne d'alimentation en air d'empilement et la commande du débit de l'air fourni à l'empilement pour fournir la quantité d'alimentation en air d'empilement déterminée en se basant sur l'ouverture/la fermeture de la première vanne et la détection de la différence entre la quantité d'alimentation en air détectée par le débitmètre et la quantité d'alimentation en air réelle de la pompe à air.
